# EUROPÄISCHE PATENTANMELDUNG

(11) **EP 1 059 807 A2**
(43) Veröffentlichungstag der Anmeldung: **13.12.2000**
(21) Anmeldenummer: 00110400.9
(22) Anmeldetag: 16.05.2000
(51) Int. Cl.: H04N 5/44

(54) **Wiedergabegerät mit einem einstellbaren Bildseitenverhältnis**

(30) Priorität: 08.06.1999 DE 19926048
(71) Anmelder: GRUNDIG Aktiengesellschaft, 90471 Nürnberg (DE)
(72) Erfinder: Stracke, Juergen, Dipl.-Ing., 90762 Fürth (DE)

(57) **Zusammenfassung**

Die vorliegende Erfindung betrifft ein Wiedergabegerät mit einem einstellbaren Bildseitenverhältnis für die Wiedergabe von Fernseh- und/oder Videosignalen, die unterschiedliche Bildseitenverhältnisse aufweisen.

Bekannte Einstellmöglichkeiten für das Bildseitenverhältnis weisen einerseits den Nachteil auf, daß die angebotenen Bildseitenverhältnisse fest vorgegeben sind, wodurch nicht immer eine optimale Anpassung des angebotenen Videosignals an das Bildseitenverhältnis der Anzeige des Wiedergabegeräts erreicht werden kann.

Bei dem erfindungsgemäßen mit einer Anzeige, einer Bildsignalaufbereitung und einer Bedieneinrichtung, die auf die Bildsignalaufbereitung einwirkt, um ein Wiedergabebildseitenverhältnis bei der Wiedergabe von Fernseh- und/oder Videosignalen mit unterschiedlichen Bildseitenverhältnissen einzustellen, werden die bekannten Nachteile dadurch vermieden, daß die Bedieneinrichtung Bedienelemente aufweist, die eine Veränderung des Bildseitenverhältnisses für das wiedergegebene Fernseh- und/oder Videosignal voneinander unabhängig in vertikaler und horizontaler Richtung ermöglichen.

## Beschreibung

Die vorliegende Erfindung betrifft ein Wiedergabegerät mit einem einstellbaren Bildseitenverhältnis für die Wiedergabe von Fernseh- und/oder Videosignalen, die unterschiedliche Bildseitenverhältnisse aufweisen.

Bisherige Fernseh- bzw. Videosignale (nachfolgend Videosignale) sowie Bildschirme oder Anzeigen für die Wiedergabe der Videosignale haben ein Bildseitenverhältnis bzw. Bildformat von 4:3. Insbesondere seit der Einführung des PALplus-Systems stehen Videosignale in nennenswertem Umfang auch mit einem Bildseitenverhältnis von 16:9 zur Verfügung. Das Bildseitenverhältnis von 16:9 wurde gewählt, weil dieses den menschlichen Seheigenschaften wesentlich besser angepaßt ist. Mit der Einführung des neuen Bildseitenverhältnisses wurden auch neue Wiedergabegeräte angeboten, welche Anzeigen des neuen Bildseitenverhältnisses 16:9 aufweisen.

Da noch immer ein großer Teil der angebotenen Videosignale ein Bildseitenverhältnis von 4:3 aufweist, bieten einige der neuen Wiedergabegeräte die Möglichkeit, mittels einer Formatumschalttaste zwischen verschiedenen Wiedergabeformaten, d. h. Bildseitenverhältnissen. des auf der Anzeige dargestellten Videosignals auszuwählen. Übliche Videosignale mit einem Bildseitenverhältnis von 4:3 können so beispielsweise formatfüllend auf der Anzeige mit dem Bildseitenverhältnis 16:9 dargestellt werden, wobei allerdings Teile der Bildinformation verloren gehen. Dies kann dadurch erreicht werden, daß beispielsweise bei Bildröhren die Ablenkspannung entsprechend variiert wird. Andere Wiedergabeformate erlauben es, Kinofilme, die üblicherweise schwarze Balken am oberen und unteren Rand bei der Wiedergabe auf der Anzeige aufweisen, formatfüllend darzustellen usw. Insgesamt steht somit eine bestimmte Anzahl von fest vorgegebenen Bildseitenverhältnissen für die Wiedergabe von Videosignalen zur Verfügung, um eine möglichst optimale Ausnutzung der Anzeige des Wiedergabegeräts zur erreichen. Die Auswahl der verschiedenen Darstellungsmöglichkeiten erfolgt dabei entweder mittels sequentieller Betätigung der Formatumschalttaste, wobei nacheinander das Videosignal entsprechend der fest vorgegebenen Bildseitenverhältnisse verändert und auf der Anzeige dargestellt wird. Bei einer anderen Einstellmöglichkeit ist es vorgesehen, daß nach Betätigung der Formatumschalttaste eine Liste mit den zur Verfügung stehenden, fest vorgegebenen Bildseitenverhältnissen auf der Anzeige in Form eines Menüs dargestellt wird, aus der das für die Wiedergabe gewünschte Bildseitenverhältnis ausgewählt werden kann. Dazu weist das Menü Einträge wie 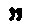 Cinema", 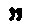 Wide", 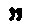 Breitbild" usw. auf.

Die bekannten Einstellmöglichkeiten weisen einerseits den Nachteil auf, daß die angebotenen Bildseitenverhältnisse ein fest vorgegebenes Verhältnis von vertikaler zu horizontaler Bildseite haben, wodurch nicht immer eine optimale Anpassung des angebotenen Videosignals an das Bildseitenverhältnis der Anzeige des Wiedergabegeräts erreicht werden kann. Andererseits ist es für einen Benutzer schwierig anhand von abstrakten Einträgen in einem Menü ein für seine Bedürfnisse optimales Bildseitenverhältnis auszuwählen.

Es ist daher Aufgabe der vorliegenden Erfindung, ein Wiedergabegerät mit einem einstellbaren Bildseitenverhältnis für die Wiedergabe von Fernseh- und/oder Videosignalen, die unterschiedliche Bildseitenverhältnisse aufweisen, anzugeben, das eine einfache Einstellung des Bildseitenverhältnisses ermöglicht.

Bei der vorliegenden Erfindung wird diese Aufgabe durch die Merkmale des Anspruchs 1 gelöst.

Bei dem erfindungsgemäßen mit einer Anzeige, einer Bildsignalaufbereitung und einer Bedieneinrichtung, die auf die Bildsignalaufbereitung einwirkt, um ein Wiedergabebildseitenverhältnis bei der Wiedergabe von Fernseh- und/oder Videosignalen mit unterschiedlichen Bildseitenverhältnissen einzustellen, wird dabei von der Überlegung ausgegangen, daß die Bedieneinrichtung Bedienelemente aufweist, die eine Veränderung des Bildseitenverhältnisses für das wiedergegebene Fernseh- und/oder Videosignal voneinander unabhängig in vertikaler und horizontaler Richtung ermöglichen.

Der Vorteil des erfindungsgemäßen Verfahrens bzw. der erfindungsgemäßen Vorrichtung ist darin zu sehen. daß eine intuitive Einstellung des Bildseitenverhältnisses ermöglicht wird, die zu einer optimalen Anpassung des jeweils zur Verfügung gestellten Fernseh- und/oder Videosignals führt.

Weitere Vorteile der vorliegenden Erfindung ergeben sich aus den abhängigen Ansprüchen sowie der nachfolgenden Beschreibung einer Ausführungsform eines erfindungsgemäßen Wiedergabegeräts anhand von Figuren.

Es zeigt:
- Fig. 1: ein Prinzipschaltbild eines Ausführungsbeispiels eines die erfindungsgemäßen Wiedergabegeräts,
- Fig. 2: mögliche Einstellungen von Bildseitenverhältnissen für das in Fig. 1 dargestellte Wiedergabegerät, und
- Fig. 3: eine Bedieneinrichtung des in Fig. 1 dargestellten Wiedergabegeräts.

Zur Erleichterung des Verständnisses der vorliegenden Erfindung sind in den Figuren nur die Bestandteile des Ausführungsbeispiels dargestellt, die im Zusammenhang mit der Erfindung von Bedeutung sind. Gleiche Bestandteile in den Figuren weisen gleiche Bezugszeichen auf.

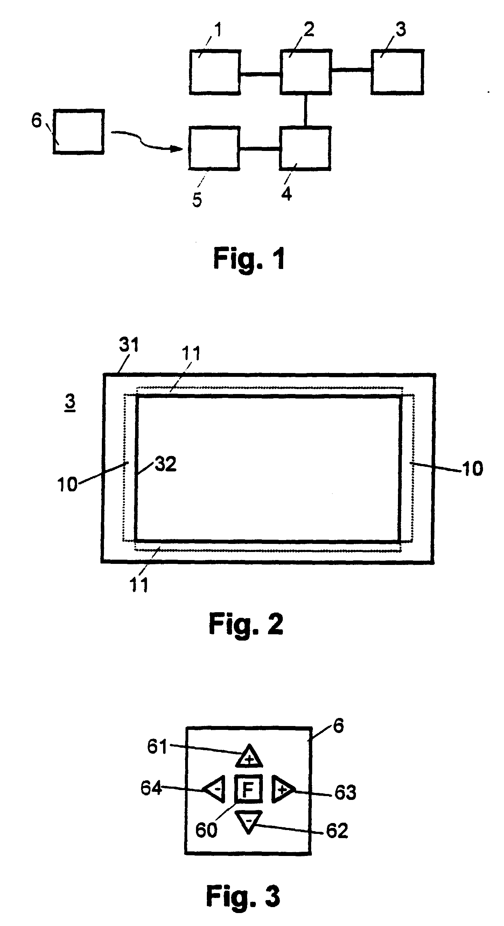

Figur1 zeigt ein Ausführungsbeispiel eines erfindungsgemäßen Wiedergabegeräts mit einem einstellbaren Bildseitenverhältnis für die Wiedergabe von Fernseh- und/oder Videosignalen (nachfolgend Videosignale), die unterschiedliche Bildseitenverhältnisse aufweisen und von einer Videosignalquelle 1 stammen, beispielsweise einem Videorecorder oder einem Fernsehempfänger. Die Videosignale werden von der Videosignalquelle 1 an eine Einrichtung 2 zur Aufbereitung der Videosignale für eine daran angeschlossene Anzeige 3 weitergeleitet. Wenn die Anzeige 3 beispielsweise von einer Bildröhre gebildet wird, kann die Einrichtung 2 zur Aufbereitung der Videosignale von einer Ablenkschaltung gebildet werden. Die Ablenkschaltung 2 wird von einer Steuereinrichtung 4, beispielsweise einem Mikrocomputer, gesteuert, die über eine Bedieneinrichtung 5, 6 beeinflußt werden kann. Die Bedieneinrichtung 5, 6 wird im dargestellten Ausführungsbeispiel von einem Fernbedienungsgeber 6 und einem Fernbedienungsempfänger 5, der mit der Steuereinrichtung 4 verbunden ist, gebildet.

Nachfolgend wird anhand der Figuren 2 und 3 die mittels des erfindungsgemäßen Wiedergabegeräts mögliche Einstellung eines Bildseitenverhältnisses für ein wiedergegebenes Videosignal erläutert.

In Figur 2 ist eine Wiedergabefläche 31 der Anzeige 3 im Bildseitenverhältnis 16:9 dargestellt. Ein Videosignal 32 mit nicht naher bekanntem Bildseitenverhältnis wird auf der Anzeige 3 dargestellt. Mittels des Fernbedienungsgebers 6 kann das Bildseitenverhältnis so von einem Benutzer geändert werden, daß es seinen Vorstellungen optimal entspricht. Für die Bedienung können beispielsweise Tasten 60 bis 64, wie in Figur 3 dargestellt, auf dem Fernbedienungsgeber 6 angeordnet sein. Mittels Taste 60 wird ein Formatmodus aktiviert, bei dem sich mittels der Cursurtasten 61 bis 64 das Bildseitenverhältnis des wiedergegebenen Videosignals verändern läßt. Die Cursortasten 61 und 62 verändern die vertikale Ausdehnung des dargestellten Videosignals 32. Beispielsweise bewirkt Cursortaste 61 eine vertikale Vergrößerung 11, wie mit den gestrichelten Linien angedeutet. Entsprechend kann mit Cursortaste 62 eine vertikale Verkleinerung erzielt werden. Die Cursortasten 63 und 64 verändern die horizontale Ausdehnung des dargestellten Videosignals 32. Beispielsweise bewirkt Cursortaste 63 eine horizontale Vergrößerung 10, wie mit den gestrichelten Linien angedeutet. Entsprechend kann mit Cursortaste 64 eine horizontale Verkleinerung erzielt werden. In bekannter Weise werden die mittels der Tastatur 60 bis 64 des Fernbedienungsgebers 6 vorgenommenen Veränderungen des Bildseitenverhältnisses vom Fernbedienungsempfänger 5 empfangen, an die Steuereinrichtung 4 weitergegeben, welche die Einrichtung 2 zur Aufbereitung der Videosignale ansteuert, die die entsprechende Veränderung des Bildseitenverhältnisses auf der Anzeige 3 bewirkt, beispielsweise im Fall einer Ablenkschaltung durch Veränderung der Ablenkspannung nach Maßgabe der Tastatureingabe.

Die Veränderung des Bildseitenverhältnisses kann vom Benutzer so vorgenommen werden, daß dadurch verursachte optische Effekte durch Stauchung oder Dehnung des wiedergegebenen Bildsignals so gering wie möglich gehalten werden. Des weiteren kann das Bildseitenverhältnis so verändert werden, daß die zur Verfügung stehende Wiedergabefläche 31 der Anzeige 3 möglichst optimal genutzt wird, d. h. es wird ein möglichst großer Bildausschnitt dargestellt.

Die durch die Betätigung der Cursortasten 61 bis 64 bewirkte Veränderung kann in vorgegebenen Schritten erfolgen, beispielsweise kann bei Betätigung der horizontalen Cursortasten 63 und 64 zwischen den Bildseitenverhältnissen 12:9 / 14:9 / 16:9 umgeschaltet werden. Es ist aber auch möglich, daß die Veränderung des des Bildseitenverhältnisses stufenlos erfolgt.

Anstelle des im Ausführungsbeispiel beschriebenen Falls einer Bildröhre als Anzeige 3 mit einer entsprechend angepaßten Einrichtung 2 zur Aufbereitung der Videosignale 2 (Ablenkschaltung) sind beliebige andere Anzeigen mit entsprechend angepaßten Einrichtungen zur Aufbereitung des Videosignals möglich. Beispielsweise LC-Displays, Plasmadisplays, Projektionssysteme usw.

Anstelle des im Ausführungsbeispiel beschriebenen Falls eines Fernbedienungsgebers mit Cursortasten sind beliebige andere Bedieneinrichtungen, wie eine Maus oder ein Trackball usw. möglich.

Zusätzlich kann das Wiedergabegerät dazu ausgelegt sein, daß das wiedergegebene Videosignal 32 (Figur 2) innerhalb der Wiedergabefläche 31 derart mittels der Bedieneinrichtung verschoben werden kann, daß vertikale oder horizontale Randbereiche entstehen, die frei vom wiedergegebenen Videosignal 32 sind. In diesen Randbereichen können dann zusätzliche, verkleinerte Videosignale, Videotext oder Internet-Informationen dargestellt werden. Zur Vergrößerung des oder der dazu zur Verfügung stehenden Randbereiche kann mittels der oben beschriebenen Vorgehensweise zur Änderung des Bildseitenverhältnisses das dargestellte Videosignal 32 verkleinert werden.

## Patentansprüche

1. Wiedergabegerät mit einer Anzeige (3), einer Bildsignalaufbereitung (2,4) und einer Bedieneinrichtung (5,6), die auf die Bildsignalaufbereitung (2,4) einwirkt, um ein Wiedergabebildseitenverhältnis bei der Wiedergabe von Fernseh- und/oder Videosignalen mit unterschiedlichen Bildseitenverhältnissen einzustellen,
**dadurch gekennzeichnet,** daß
die Bedieneinrichtung (5,6) Bedienelemente (61 bis 64) aufweist, die eine Einstellung des Bildseitenverhältnisses für das wiedergegebene Fernseh- und/oder Videosignal voneinander unabhängig in vertikaler und horizontaler Richtung ermöglichen.

2. Wiedergabegerät nach Anspruch 1,
**dadurch gekennzeichnet,** daß
die Veränderung des Bildseitenverhältnisses in vertikaler und horizontaler Richtung variabel möglich ist.

3. Wiedergabegerät nach Anspruch 1,
**dadurch gekennzeichnet,** daß
die Veränderung des Bildseitenverhältnisses in vertikaler und horizontaler Richtung in vorgegebenen Stufen möglich ist.

4. Wiedergabegerät nach einem der Ansprüche 1 bis 3,
**dadurch gekennzeichnet,** daß
die Bedieneinrichtung (5,6) Cursortasten (61 bis 64) aufweist.

5. Wiedergabegerät nach einem der Ansprüche 1 bis 4,
**dadurch gekennzeichnet,** daß
die Anzeige (3) ein Bildseitenverhältnis von 16:9 aufweist.
